# EUROPEAN PATENT SPECIFICATION

(11) **EP 0 634 242 B1**
(45) Date of publication and mention of the grant of the patent: **20.03.2002**
(21) Application number: 93307957.6
(22) Date of filing: 07.10.1993
(51) Int. Cl.: B23D 31/00, B23D 17/00, E02F 3/96, B26D 7/18

(54) **Punch-type cutter**
Ausstanzähnliche Schneidvorrichtung
Dispositif de coupe travaillant comme une poinçonneuse

(30) Priority: 16.07.1993 JP 17633293
(43) Date of publication of application: 18.01.1995
(73) Proprietor: OHYODO DIESEL CO., Ltd., Osaka-shi, Osaka-fu (JP)
(72) Inventor: Morikawa, Sumio, Sakai-shi, Osaka-fu (JP); Nakayama, Noboru, Toyonaka-shi, Osaka-fu (JP); Zakohji, Nobuyuki, Toyonaka-shi, Osaka-fu (JP)
(74) Representative: Tillbrook, Christopher John

(56) References cited:
- EP-A- 0 218 899
- WO-A-93/05923
- DE-A- 3 618 191
- FR-A- 900 511

## Description

### Field of the Invention:

The present invention relates to a punch-type cutter to cut structural members of buildings, vehicles, marines boats or the like into rectangular cutout pieces for de-construction of such buildings or the like.

### Prior Art:

A shearing machine including a pair of linear blades connected for scissor-like movement is usually employed to de-construct structural members of buildings, vehicles, marine boats or the like. It is noted, however, that, when such a shearing machine is used to cut a structural member or workpiece having a length larger than that of its blades, it is difficult to completely cut such structural member along it entire length due to the interference between the blades and the structural member. In order to avoid this problem, a punch-type cutter has been proposed which comprises a pair of jaw members having, in their abutting surface, a cutting blade of a substantially U-shaped configuration (refer to Japanese Patent Publication No. 05(1993)-3224). This cutter is capable of cutting a workpiece into a small pieces of a rectangular configuration, so that the blades can be easily advanced. Further, such small pieces of a rectangular configuration have substantially constant dimensions and weight, so that they may be easily handled and recycled.

It is noted, however, that the above punch-type cutter has a problem in that rectangular cutout pieces may remain between the jaw members. Accordingly, such cutter requires sweeping operation to remove cutout pieces from the abutting surface of the jaw members after each cutting operation, since no discharge mechanism for such cutout pieces is provided. Such sweeping operation is performed, for example, by opening the jaw members, after completion of cutting work, and by shaking the cutter. Such sweeping operation is of course time-consuming and wearisome.

A punch-type cutter provided with a discharge mechanism for cutout pieces has been proposed (refer to Japanese Patent Publication No. 05(1993)-3224). The discharge mechanism includes a steel plate connected through springs to an abutting surface of one of the jaw members, the plate serving to displace cutout pieces outwardly from the jaw member. Specifically, the springs disposed between the plate and the one of the jaw member are compressed when the jaw member are closed. When the jaw members are opened, the thus compressed springs extend to urge the steel plate outwardly, so as to displace the remaining cutout pieces out of the jaw member. It is to be noted that such discharge mechanism is not preferable since it makes the cutter complicated in its construction. It is also noted that, when the jaw members are engaged with each other, significant amount of force is applied therebetween, thus causing a risk of damage of the springs. Furthermore, a portion of the power applied to the jaw members is consumed to compress the springs, thus increasing power loss.

WO-A-93/05923 discloses a punch cutter according to the preamble of Claim 1.

### Summary of the Invention:

The present invention comprises a punch cutter according to Claim 1 - and which provides a simple and durable punch-type cutter for permitting automatic discharge of cutout pieces from the cutter.

In one embodiment, one jaw member of the pair is stationary, while the other jaw member is movable and connected thereto by an actuator cylinder.

In a particular construction, a piston rod of the actuator cylinder is pivotably connected to the stationary jaw member, and the actuator cylinder is pivotably connected to the movable jaw member at a position rearwardly of the pivot shaft.

When the paired jaw members are closed, the protrusion is forced against the workpiece to deform it into a curved configuration. Then, one of the cutting blades is positioned within and inter-engaged with the other of the cutting blades, so that a portion of the workpiece of a substantially rectangular configuration is cut or removed from the workpiece in a punching fashion. When the jaw members are closed further, the cutout piece from the workpiece is displaced downwardly by means of the protrusion, so as to be discharged through the through hole. The cutout piece may be discharged smoothly, since it has been deformed into a curved configuration with the apex thereof facing to the direction of discharge, thus causing less friction relative to the inner wall of the through hole.

### Brief Description of the Drawings:

Fig. 1 is a perspective view of a punch-type cutter according to the invention;
Fig. 2 is a side elevational view of the punch-type cutter of Fig. 1;
Fig. 3 is a vertical sectional view along line A-A of Fig. 2;
Fig. 4 is an enlarged sectional view illustrating cutting operation of the punch-type cutter;
Fig. 5 is an enlarged sectional view illustrating the punch-type cutter just after completion of cutting operation;
Fig. 6 is an enlarged sectional view illustrating cutting operation of a punch-type cutter having no protrusions; and
Fig. 7 is an enlarged sectional view illustrating the punch-type cutter having no protrusions just after completion of cutting operation.

### Detailed Description of the Preferred Embodiments:

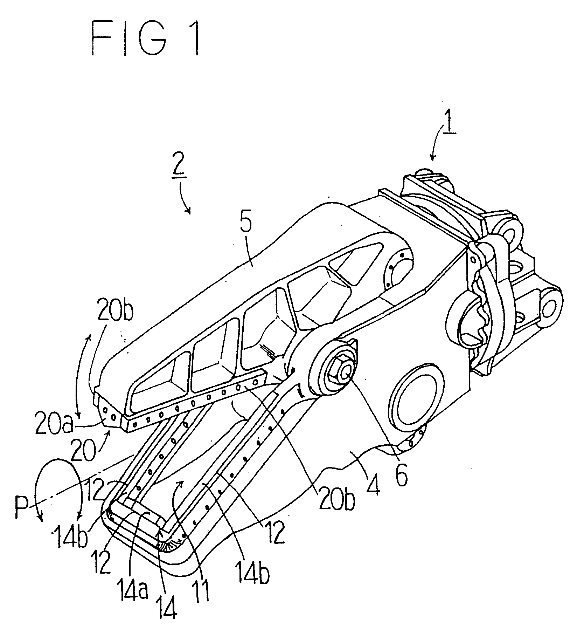

The invention will be explained in detail below with reference to Figs. 1 through 7.

Fig. 1 shows a device of the invention in its entirety. The device, i.e., punch-type cutter, in accordance with the invention includes a rotary bracket 1 and a main body 2 disposed forwardly of the rotary bracket 1. The rotary bracket 1 is connected to a forward end of an arm of working machine, such as a power shovel (not shown), by means of a pin connection. The rotary bracket 1 houses therein a hydraulic motor having an output shaft connected to the main body. When the hydraulic motor is actuated, the punch-type cutter is rotated about the axis P depending on rotational direction of the hydraulic motor. Thus, the punch-type cutter may be selectively displaced to an appropriated position by means of extensive or retractive movement of an arm of a power shovel, as well as reversible rotation of the hydraulic motor, depending on a posture or orientation of a workpiece or a piece of material to be cut.

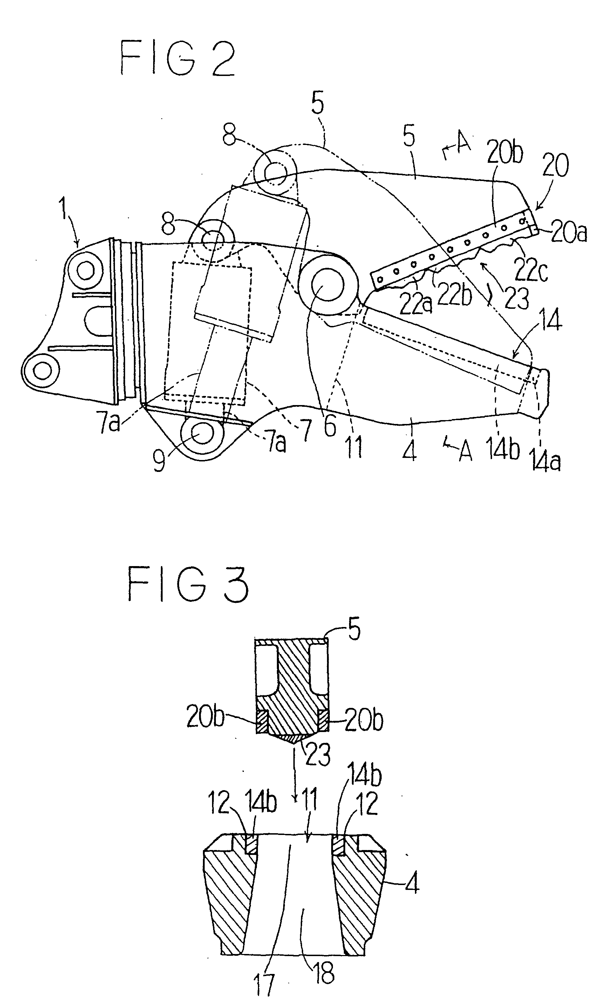

The main body 2 includes a pair of jaw members 4, 5 arranged in a scissor-like fashion. The lower jaw member 4 is, at the rearward portion thereof, fixed to the rotary bracket 1 (the lower jaw member 4 will be referred to as a "stationary jaw hereinbelow). The upper jaw member 5 is pivotably connected to the stationary jaw 4 through a pivot shaft 6 (the upper jaw will be referred to as a "movable jaw" herein below). A hydraulic cylinder 7 is housed within the stationary jaw 4 as shown in Fig. 2. The cylinder end of the hydraulic cylinder 7 is pivotably connected to the movable jaw 5 by means of a piston pin 8 disposed rearwardly of the pivot shaft 6. A piston rod 7a of the hydraulic cylinder 7 is pivotably connected to a lower portion of the stationary jaw 4 by means of a rod pin 9. Thus, retraction or extension of the hydraulic cylinder 7 causes vertical movement of the movable jaw 5 about the pivot shaft 6, whereby the jaw members 4, 5 are opened or closed in a scissor-like fashion. The movable jaw 5, in its closed position, will be arranged so that the lower surface of an upper blade 20 (to be described below) of the movable jaw 5 is located at a position below the lower end surface of a lower blade 14, as shown by two-dot chain line in Fig. 2).

It is noted that the hydraulic cylinder 7 is arranged in a inverted manner, as shown in Fig. 2. This arrangement serves to prevent the hydraulic cylinder 7 from being damaged upon contact or collision with structural members of a marine boat, for example, which might occur when the movable jaw 5 is closed (i.e., the cylinder 7 is extended). That is to say, and when the cylinder rod 7a is pivotably connected to the movable jaw 5 in a manner opposite to that shown in the drawings, the cylinder rod 7a will be exposed exteriorly, so that there may be a possibility for the rod 7a and seal portion thereof of less strength to be deformed or damaged upon contact or collision with structural members. On the contrary, and when the cylinder end is connected to the movable jaw 5, as shown in the drawings, a rigid cylinder case will be exposed exteriorly upon extension of the cylinder 7. Thus, the cylinder is protected, so as to maintain its ability or function.

The stationary jaw 4 includes a through hole 11 of a rectangular cross-section when viewed in a horizontal plane. The through hole 11 extends from the abutting surface toward a lower portion of the stationary jaw 4. Grooves 12 are formed in the front surface, and side surfaces defining an upper opening of the through hole 11. A lower blade 14 of a substantially U-shaped configuration is inserted in the grooves 12. The lower blade 14 includes a front blade member 14a of a rectangular, columnar configuration, and a pair of side blade members 14b. The front blade member 14, and the pair of side blade members 14b are removably received in the front groove 12, and the side grooves 12, respectively, by means of fastening means such as bolts.

The through hole 11 includes a parallel portion 17 enclosed by the front blade member 14a and side blade members 14b, and a taper portion 18 diverging in the downward direction. That is to say, the parallel portion 17 of the through hole 11 has a constant width, while the portion below the parallel portion 17 has a width which gradually increases in the downward direction.

The movable jaw 5 is mounted, at the abutting surface thereof, with an upper blade 20 of a substantially U-shaped configuration. The upper blade 20, like the lower blade 14, includes a front blade member 20a and a pair of side blade members 20b. The blade members 20a, and 20b of the upper blade 20 are received in their respective grooves (not shown) formed in a lower surface of the movable jaw 5 and removably retained by means of bolt, for example. The blade members 20a, 20 are arranged so that they are fitted within the blade members 14a, 14b of the lower blade 14. It is noted that the forward blade member 20a is formed into a substantially triangular configuration, as shown in Fig. 1. Thus, the front blade members 20a and 14a of the movable jaw 5 and stationary jaw 4, respectively, cooperate to cut or shear a workpiece or piece of material to be cut from its center to the opposite sides.

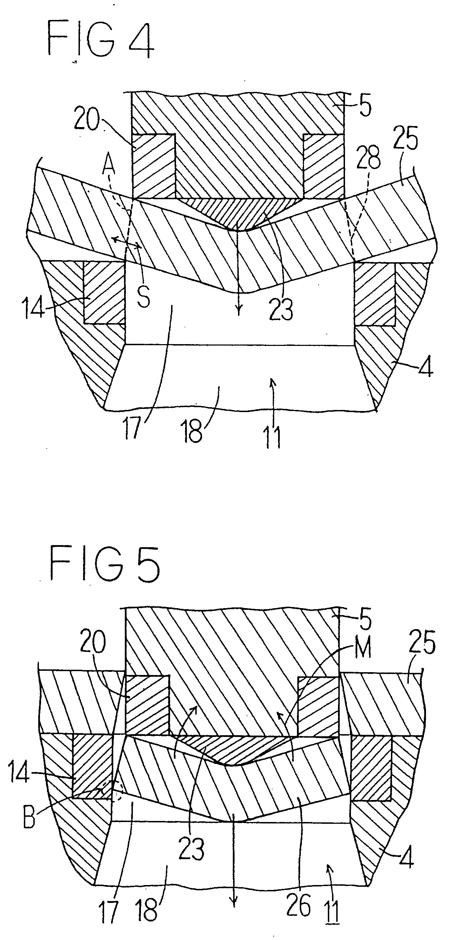

A series of block bodies 22a-22c are arranged within the upper blade 20 along a longitudinal line. The block bodies 22a-22c form a protrusion 23 extending from the lower surface (cutting surface) of the upper blade 20 to a point below that lower surface. The protrusions 23 form a wave-like configuration, as shown in Fig. 2. Each of the protrusions 23 has a triangular vertical section as shown in Fig. 3.

When the hydraulic cylinder 7 is extended to close the movable jaw 5, the protrusions 23 first become engaged with a workpiece 25, so as to displace the workpiece 25 downwardly, whereby the workpiece is deformed into a substantially V-shaped configuration, as shown in Fig. 4. Then, the upper and lower blades 20, 14 are inter-engaged with each other, so that the workpiece 25 is cut in a punch-out fashion to form a rectangular piece. When the movable jaw 5 is further closed as shown in Fig. 5, the cutout piece 26 is displaced downwardly by means of the protrusions so as to be passed through the parallel portion 17 of the through hole 11 and into the diverging or tapered portion 18. The cutout piece 26 having reached the diverging portion 18 falls through the diverging portion 18 by gravity and is discharged from the lower opening. Then, the hydraulic cylinder 7 is retracted to return the movable jaw 5 to the initial position for repetition of the above procedure. It should be noted that, even when the through hole 11 clogs with the cutout piece 26, such cutout piece will be displaced through the through hole 11 by means of a new or next cutout piece.

In accordance with the invention, cutout pieces 26 produced by the upper and lower blades 20, 14 are automatically discharged from the stationary jaw 4 through the through hole 11, so that no cutout pieces may remain between the upper and lower jaw. Accordingly, continuous and efficient cutting operation may be realized. The cutter of the invention is not complicated in construction, since it includes no additional mechanical components, except for the through hole 11 and protrusions 23. It is also noted that the cutter of the invention withstands compression force generated between the jaw members 4, 5 upon engagement thereof, thus providing a high durability. It is noted further that cutout pieces 26 may be discharged or expelled smoothly by reason of the diverging through hole 11.

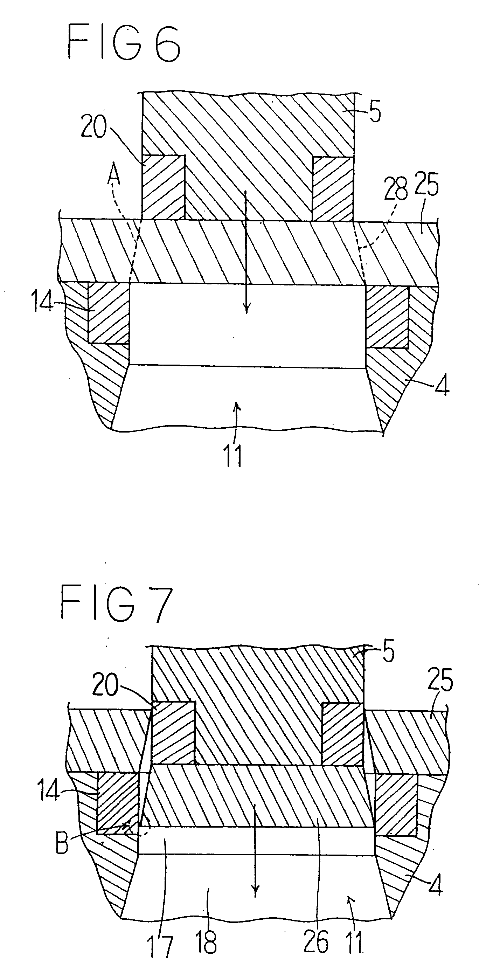

Furthermore, the cutter of the invention, which includes the protrusions 23, in addition to the through hole 11, provides particular advantages (1) and (2) below over one which includes the through hole 11 but has no protrusions 23.
(1) A reduced power is required for initial cutting operation for the reason below:
   With the cutter having the protrusions 23, the workpiece 25 is deformed into a substantially V-shaped configuration, as shown in Fig. 4. Accordingly, only corner portion or edge of the blades 14, 20 engage with the workpiece, thus causing a notch effect in such engaged area. This enables the cutter to cut the workpiece 25 with a reduced power. A tensile stress S, in addition to shearing stress, is also created in broken area A of the workpiece, since the workpiece 25 is deformed into a substantially V-shaped configuration. This also contributes to reduction of power required. On the contrary, when a cutter without protrusions is used, the blades 14, 20 are contacted with the workpiece through entire width thereof as shown in Fig. 6, thus causing no notch effect. Consequently, only a shearing force is exerted in the broken area of the workpiece and no tensile stress mentioned above is resulted.
(2) cutout pieces 26 from the workpiece are smoothly forced into the diverging portion 18 without causing blockage or clog of the parallel portion 17 for the reason below:
   With the cutter having no protrusions 23, the portion B of the cutout piece 26 may cause frictional engagement with the lower blade 14, thus causing a risk of clogging, as shown in Fig. 7. On the contrary, and when a protrusion 23 is provided, a bending moment M is exerted by the protrusion upon closing operation of the movable jaw 5, as shown by the arrow in Fig. 5. Accordingly, the cutout piece 26, when got caught to the inner wall of the through hole, may be deformed into a V-shaped configuration by reason of such bending moment so that it may easily pass through the through hole.

The invention is not limited to the above construction and may take various forms. For example, the lower jaw 4 and upper jaw 5 may be constructed to be movable jaw and stationary jaw, respectively. The protrusions 23 may take various configurations other than the above, provided that they are capable of deforms the workpiece 26 into a curved configuration.

As mentioned above, cutout pieces produced by the blades are automatically discharged through the through hole located within one of the blades. Thus, no cut-out pieces remain between the pair of jaws. It is possible to perform efficient and constant cutting operation without requiring complicated mechanical construction for discharging cutout pieces. The provision of the protrusions in addition to the through hole also contributes to reduction of power required and smooth discharge of cutout pieces from the cutter. Overall the punch-type cutter is of a relatively simple construction, with a high durability, capable of automatic cutout piece discharge.

Smooth cut-out piece discharge is facilitated by the divergent through hole.

It is possible to protect the hydraulic cylinder from contacting structural members of, say, marine boats, by pivotably connecting the piston rod of the hydraulic cylinder to the stationary jaw member and by pivotably connecting the cylinder end of the movable jaw member at a position rearwardly of the pivot shaft. Thus, stable cylinder function may be maintained for a prolonged time of use.

## Claims

1. A punch-cutter comprising:
a pair of jaw members (4,5)
adapted to be opened and closed,
about a pivot shaft (6),
and with respective cutter blades (14, 20),
of substantially U-shaped, co-operatively inter-fitting, configuration,
to produce a workpiece (25) cut-out portion (26),
a jaw through hole (11),
of substantially rectangular configuration
in horizontal cross-section,
for cut-out portion discharge,
upon workpiece penetration and severance;
**characterized by**
• a protrusion (23) upon one jaw, disposed within the jaw cutting blades, and extending to a point outwardly of the blade cutting plane, and locatable in the through hole (11) of another jaw;
• the protrusion (23) comprising a series of blocks (22a-22c), of triangular cross-section, and wave-like longitudinal side profile, as an in-fill to the associated blade span, and
• being disposed, in relation to the cutter blades, to engage a prospective cut-out portion upon initial jaw closure, somewhat before workpiece blade contact, and progressively to deform the prospective cut-out portion, about workpiece blade contact, whilst still entrained with the workpiece;
• the through hole (11) having a flared exit mouth (18), to promote discharge therefrom of a pre-deformed cut-out portion, as a discrete, unitary, element, upon severance from the workpiece, by co-operative blade interaction.

2. A punch-cutter
as claimed in Claim 1,
wherein one jaw member of a pair is stationary,
while the other is relatively movable,
by an interconnecting actuator cylinder.

3. A punch-cutter
as claimed in Claim 2,
wherein a piston rod of said actuator cylinder
is pivotably connected to said stationary jaw member,
and the actuator cylinder
is pivotably connected to said movable jaw member,
at a position rearwardly of said pivot shaft.

## Patentansprüche

1. Stanz-Schneidvorrichtung, die folgendes umfaßt:
ein Paar Backenglieder (4, 5), die zum Öffnen und Schließen um einen Drehschaft (6) ausgeführt sind,
und mit jeweiligen im wesentlichen U-förmigen, zusammenwirkend ineinanderpassend konfigurierten Schneidmessern (14, 20) zur Erzeugung eines ausgeschnittenen Teils (26) eines Werkstücks (25),
ein im Horizontalquerschnitt im wesentlichen rechteckig konfiguriertes Backen-Durchgangsloch (11) zur Abführung der ausgeschnittenen Teile bei Durchdringung und -trennung des Werkstücks,
**dadurch gekennzeichnet, daß**
- ein Vorsprung (23) an einer Backe in den Backenschneidmessern angeordnet ist, sich zu einer außerhalb der Messerschneidebene befindlichen Stelle erstreckt und im Durchgangsloch (11) einer anderen Backe positionierbar ist;
- der Vorsprung (23) eine Reihe von Blöcken (22a-22c) mit dreieckigem Querschnitt und wellenförmigem Längsseitenprofil als Füllung für die zugehörige Messerspanne umfaßt und
- bezüglich der Schneidmesser so angeordnet ist, daß er bei anfänglichem Schließen der Backe einen zukünftigen Ausschnittsteil kurz vor dem Werkstück-Messer-Kontakt in Eingriff nimmt, um das zukünftige Ausschnittsteil allmählich um den Werkstück-Messer-Kontakt zu verformen, während es noch mit dem Werkstück mitgeführt wird;
- das Durchgangsloch (11) eine konisch aufgeweitete Austrittsmündung (18) aufweist, um eine Abführung eines zuvor verformten Ausschnittsteils daraus als getrenntes, einstückiges Element bei Abtrennung vom Werkstück durch gemeinsame Messerwechselwirkung zu fördern.

2. Stanz-Schneidvorrichtung nach Anspruch 1, bei der ein Backenglied eines Paars feststehend ist, während das andere durch einen VerbindungsStellgliedzylinder relativ beweglich ist.

3. Stanz-Schneidvorrichtung nach Anspruch 2, bei dem eine Kolbenstange des Stellgliedzylinders mit dem feststehenden Backenglied und der Stellgliedzylinder an einer rückwärtig des Drehschafts liegenden Stelle mit dem beweglichen Backenglied schwenkbar verbunden ist.

## Revendications

1. Dispositif de poinçonneuse-coupeuse, comprenant:
une paire d'éléments de mâchoires (4, 5) prévus pour être ouverts et fermés autour d'un pivot (6), et comprenant des lames de coupe (14, 20) respectives, de configuration substantiellement en U, s'adaptant l'une à l'autre de manière coopérante, pour produire une portion (26) découpée dans une pièce à usiner (25),
un trou traversant les mâchoires (11), de configuration substantiellement rectangulaire en section transversale horizontale, destiné à l'évacuation de la portion découpée lors de la pénétration à travers la pièce à usiner et de son découpage ;
**caractérisé par**
• une saillie (23) sur une mâchoire, disposée à l'intérieur des lames de coupe de la mâchoire, et s'étendant jusqu'à un certain point vers l'extérieur du plan de coupe de la lame, et pouvant être placée dans le trou traversant (11) d'une autre mâchoire ;
• la saillie (23) comprenant une série de blocs (22a-22c), de section transversale triangulaire, et de profil latéral longitudinal ondulé, servant de remplissage pour l'écartement associé des lames, et
• étant disposée, par rapport aux lames de coupe, de manière à engager une portion susceptible d'être découpée lors de la fermeture initiale des mâchoires, un peu avant le contact de la pièce à usiner avec les lames, et à déformer progressivement la portion susceptible d'être découpée, autour du contact entre les lames et la pièce à usiner, alors qu'elle reste toujours entraînée avec la pièce à usiner ;
• le trou traversant (11) ayant une ouverture de sortie évasée (18), pour faciliter l'évacuation hors de celui-ci d'une portion découpée pré-déformée, sous la forme d'un élément discret unitaire, lors de son sectionnement de la pièce à usiner, par interaction coopérante des lames.

2. Dispositif de poinçonneuse-coupeuse selon la revendication 1, dans lequel un élément de mâchoire d'une paire est stationnaire, tandis que l'autre est relativement mobile, par le biais d'un cylindre d'actionnement d'interconnexion.

3. Dispositif de poinçonneuse-coupeuse selon la revendication 2, dans lequel une tige de piston dudit cylindre d'actionnement est connectée pivotante audit élément de mâchoire stationnaire, et le cylindre d'actionnement est connecté pivotant audit élément de mâchoire mobile, en une position en arrière dudit pivot.
